Europäisches Patentamt

**European Patent Office**

**Office européen des brevets**

(11) Numéro de publication: **0 187 608**
**B1**

(12) **FASCICULE DE BREVET EUROPEEN**

(45) Date de publication du fascicule du brevet: **25.04.90**

(51) Int. Cl.⁵: **F 16 L 37/08**

(21) Numéro de dépôt: **85440076.9**

(22) Date de dépôt: **20.12.85**

(54) **Raccord rapide pour circuits de fluide sous pression dont la pression peut atteindre cent cinquante bars.**

(30) Priorité: **03.01.85 FR 8500113**
**31.05.85 FR 8508375**

(43) Date de publication de la demande:
**16.07.86 Bulletin 86/29**

(45) Mention de la délivrance du brevet:
**25.04.90 Bulletin 90/17**

(84) Etats contractants désignés:
**AT BE CH DE GB IT LI LU NL SE**

(56) Documents cités:
**FR-A-2 510 228**
**GB-A-1 486 671**
**GB-A-2 051 280**
**GB-A-2 070 176**
**US-A-4 146 254**

(73) Titulaire: **SOCIETE DES FLEXIBLES ANOFLEX**
**Société Anonyme dite**
**29, Avenue Barthélemy-Thimonnier**
**F-69300 Caluire et Cuire (FR)**

(73) Titulaire: **Société des Raccords Anoflex Soderax,**
**Société Anoyme dite:**
**Zone Industrielle Chemin du Moulin Carron**
**F-69570 Dardilly (FR)**

(72) Inventeur: **Coya, Raymond**
**7, Impasse Claude Jourdan**
**F-69008 Lyon (FR)**

(74) Mandataire: **Aubertin, François**
**Cabinet Lepage & Aubertin Innovations et**
**Prestations 4, rue de Haguenau**
**F-67000 Strasbourg (FR)**

Courier Press, Leamington Spa, England.

**Description**

L'invention concerne un raccord rapide pour circuits de fluide sous pression dont la pression peut atteindre cent cinquante bars, composé d'un corps présentant un alésage dans lequel est engagée l'extrémité du tuyau du circuit, et comportant une rondelle de retenue, une bague dilatatrice, un joint d'étanchéité et une bague supérieure de retenue.

De nombreuses machines comportent des circuits de fluide sous pression. Ainsi, les véhicules et, notamment les automobiles et les camions, sont pourvus de circuits de fluide dont la pression est variable dans une large gamme en fonction de leur utilisation.

On connait déjà, par le document US—A—4 146 254, un raccord rapide correspondant au préambule de la revendication 1.

Cependant, il s'agit d'un raccord destiné au couplage de tuyaux devant être utilisés à des pressions de l'ordre de 180 à 200 p.s.i. (1.52 MPa), soit douze à quinze bars, et qui se compose principalement d'un corps cylindrique pourvu d'un manchon interne destiné au centrage des tuyaux à raccorder.

Ce raccord est pourvu à ses extrémités de bagues de retenue collées ou soudées sur le corps cylindrique. En cas de soudure, il existe un risque de déformation dudit corps, et de ce fait, le raccord selon ce document américain ne peut être utilisé que pour les pressions indiquées ci-dessus, mais non pas pour des pressions de cent cinquante bars qui existent dans certains circuits.

En effet, la pression dans les différents circuits utilisés est très variable. Ainsi, la pression est de trois bars dans le circuit de refroidissement d'eau et dans le circuit de fioul ou gasoil, de dix bars dans le circuit de refroidissement de l'huile, de dix à vingt bars dans le circuit de freinage et d'air comprimé dans le cadre des poids lourds, de trente bars dans le circuit d'air conditionné et d'environ cent bars dans le circuit de la direction assistée. Il est donc nécessaire d'avoir à sa disposition une grande gamme de raccords rapides adaptés aux différents circuits, ce que ne permet pas le raccord décrit dans le brevet américain précité.

Par ailleurs, ce raccord comporte une douille de renfort carottée dans la masse, ce qui, d'une part, pose un problème d'usinage du fait que l'on est obligé de réduire la cadence des machines de l'ordre de 50% et, d'autre part, rend très difficile la réalisation de cette douille dans des matériaux plus durs, tels que l'acier ou des alliages d'aluminium.

La présente invention a pour but de remédier à ces inconvénients.

L'invention telle qu'elle est caractérisée dans la revendication 1, résout le problème consistant à remédier à ces inconvénients.

Les avantages obtenus par la présente invention consistent essentiellement en ce que ce raccord rapide, monté sur des circuits de fluide sous pression, permet d'atteindre des pressions de cent cinquante bars et peut être utilisé pour des tuyaux en polyamide, type monotube ou bi-tube, en aluminium, en cuivre et an acier, sans que les extrémités de ces tuyaux ou tubes soient préparées par prérainurage ou préusinage, et sans que la bague supérieure de retenue soit collée ou soudée sur le corps.

De plus, le serrage et l'étanchéité sont accrus au-fur-et-à-mesure de l'augmentation de la pression tout en garantissant une bonne étanchéité à basse pression, en raison de la forme particulière du joint.

Par ailleurs, on obtient une grande sécurité du fait que les différents éléments composant le raccord rapide selon l'invention sont des pièces moulées, injectées ou découpées dont la tolérance est obtenue lors de la réalisation des pièces et n'est pas tributaire des aléas de l'usinage.

De plus, grâce à la douille de renfort rapportée, l'on accélère considérablement les temps d'usinage des corps de raccords et il y a la possibilité d'utiliser des matières plus nobles telles que l'acier, l'acier inoxydable, l'aluminium ou autres. En outre, l'invention permet de limiter les stocks de produits finis, un usinage identique pour un corps de raccord donné pouvant être utilisé par exemple, pour des tuyaux ayant un diamètre extérieur identique mais un diamètre intérieur différent, par le simple changement de la douille rapportée. Il est certain qu'il est moins onéreux d'interchanger des douilles rapportées que de réaliser des corps différents en fonction du diamètre intérieur du tuyau.

L'invention est exposée ci-après plus en détail à l'aide de dessins représentant seulement deux modes d'exécution.

Les figures 1 à 8 concernent un raccord rapide qui, selon un premier mode d'exécution, comporte une douille carottées dans la masse, et dont:

la figure 1 est une vue en élévation partiellement en coupe du raccord rapide conforme à l'invention et monté sur un tube d'un circuit d'un fluide sous pression.

la figure 2 est une vue éclatée en élévation et partiellement en coupe des deux éléments du raccord: le raccord proprement dit et le tube du circuit.

la figure 3 est une vue en élévation et partiellement en coupe du corps du raccord.

la figure 4 est une vue agrandie d'une section du joint d'étanchéité.

la figure 5 est une vue agrandie d'une section de la bague dilatatrice.

la figure 6 est une vue en coupe selon ligne de coupe VI—VI de la figure 7 de la rondelle d'ancrage.

la figure 7 est une vue en plan de la rondelle d'ancrage.

la figure 8 est une vue en élévation et partiellement en coupe de la bague supérieure de retenue.

Les figures 9 et 10 concernent un raccord rapide qui, selon un second mode d'exécution, comporte une douille rapportée, et dont:

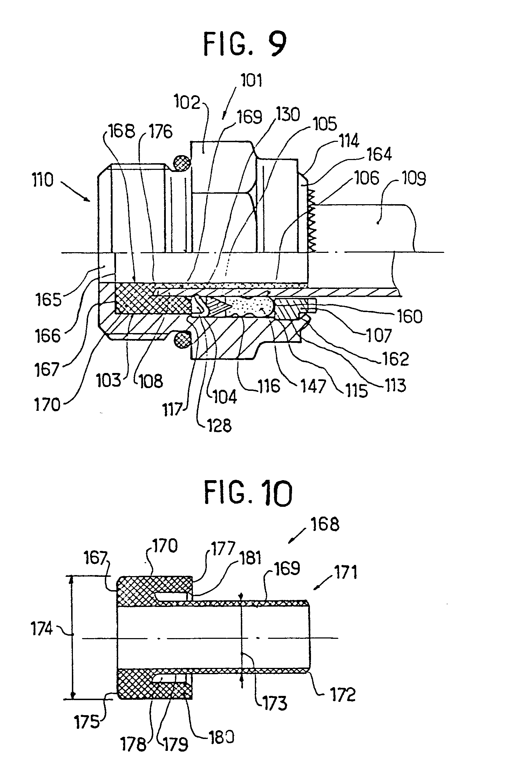

la figure 9 est une vue en élévation et en demi- coupe d'un raccord rapide monté sur l'extrémité d'un tuyau et pourvu d'une douille intérieure rapportée conforme à l'invention.

la figure 10 est une vue en élévation et en coupe de la douille intérieure conforme à l'invention.

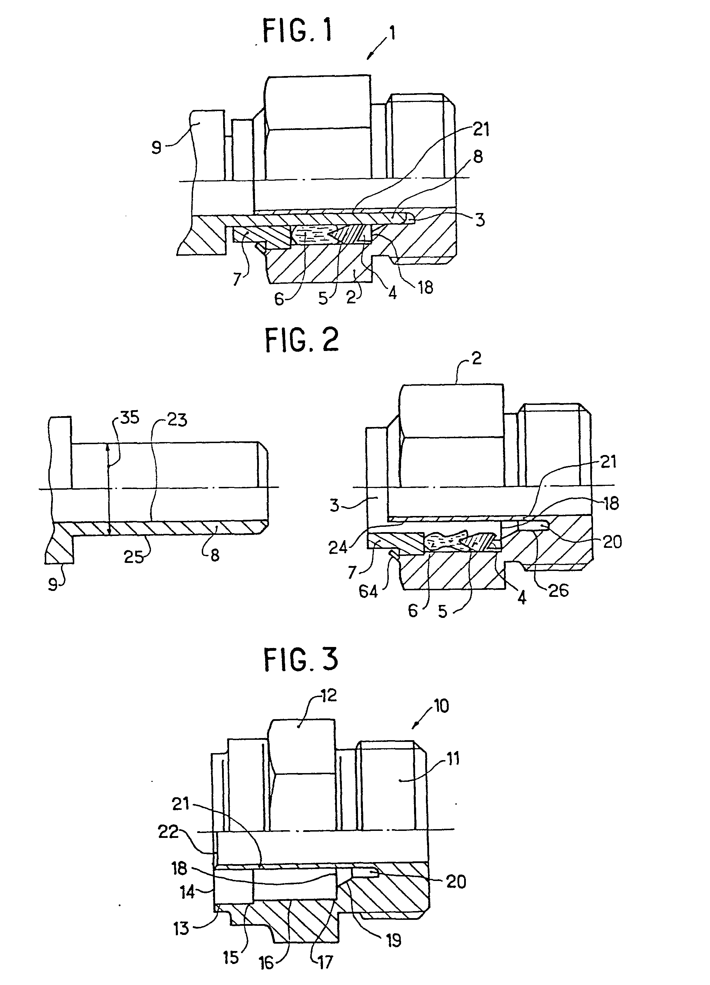

On se réfère aux figures 1 et 2.

Le raccord rapide 1 comporte un corps 2 présentant un alésage 3 dans lequel sont disposés des moyens d'ancrage 4 et des moyens dilatateurs 5 coopérant avec des moyens d'étanchéité 6, le tout étant maintenu par une bague supérieure de retenue 7. Dans cet alésage 3 est engagée l'extrémité 8 d'un tuyau 9 d'un circuit d'un fluide sous pression. Ce tuyau 9 peut être en polyamide, en aluminium, en cuivre, voire en acier.

On se réfère à la figure 3.

Le corps 2 comporte à l'une de ses extrémités 10 un embout fileté 11. Pour visser ce dernier dans un trou taraudé d'un raccord femelle non représenté, ledit corps 2 est pourvu d'un six pans 12.

Dans l'alésage 3, on réalise un premier décrochement 13 situé à proximité de l'extrémité 14, dans lequel on introduit l'extrémité 8 du tuyau 9 et dont l'épaulement 15 sert d'arrêt à la bague supérieure de retenue 7. Ce premier décrochement 13 est suivi par un second décrochement 16 servant de logement aux moyens d'étanchéité 6, aux moyens dilatateurs 5 et aux moyens d'ancrage 4, ces derniers prenant appui contre l'épaulement 17.

Le fond 18 de ce second décrochement 16 comporte des moyens de centrage formés par un évidement tronconique 19 suivi d'un alésage borgne 20. Cet évidement tronconique 19 a pour but de diriger l'extrémité 8 du tuyau 9 dans l'alésage borgne 20 et, de ce fait, de centrer ladite extrémité 8 du tuyau 9 dans le corps 2.

Concentriquement à l'alésage 3, le corps 2 comporte une douille de renfort 21 dont l'extrémité avant 22 est légèrement en retrait par rapport à l'extrémité 14 dudit corps 2.

Selon un premier mode de réalisation, cette douille de renfort 21 et le corps 2 sont monoblocs.

L'extrémité 8 du tuyau 9 est enfilée sur la douille de renfort 21 et la paroi interne 23 épouse le pourtour extérieur 24 de la douille de renfort 21 alors que la paroi extérieure 25 épouse la paroi interne 26 de l'alésage borgne 20 (voir également figure 2).

L'extrémité 8 du tuyau 9 est maintenue en place par les moyens d'ancrage 4. Ainsi, la bague supérieure de retenue 7 coopère avec les différents moyens d'étanchéité 6, de dilatation 5, d'ancrage 4 et avec la douille de renfort 21 pour permettre le positionnement et l'ancrage de l'extrémité 8 du tuyau 9.

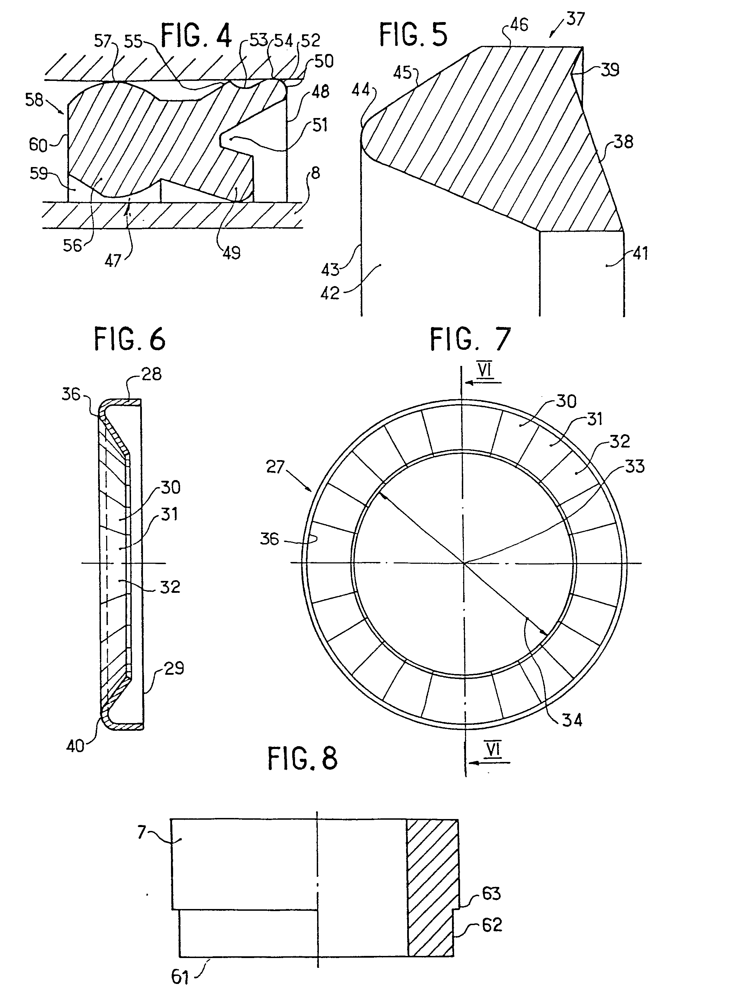

On se réfère aux figures 6 et 7.

Ces moyens d'ancrage 4 sont constitués par une rondelle de retenue 27 formée d'un anneau extérieur 28 épousant le second décrochement 16, le chant 29 de cet anneau extérieur 28 prenant appui contre l'épaulement 17. Cet anneau extérieur 28 comporte une pluralité de lamelles 30, 31, 32 disposées en éventail par rapport au centre 33 de la rondelle de retenue 27. Ces lamelles 30, 31, 32 forment un certain angle avec l'anneau extérieur 28 et sont dirigées vers l'épaulement 17. Le diamètre intérieur 34 de la rondelle de retenue 27 est légèrement inférieur au diamètre 35 de l'extrémité 8 du tuyau 9. Chaque lamelle 31 est indépendante des lamelles voisines 30, 32 et de ce fait, est élastique par rapport à son chant de raccordement 36 avec l'anneau extérieur 28.

En raison de l'inclinaison et de l'élasticité, les différentes lamelles 30, 31, 32, s'effacent lors de l'introduction de l'extrémité 8 du tuyau 9 mais s'incrustent dans ladite extrémité 8 lorsque s'exerce sur cette dernière un effet de déboitement provoqué par la pression. Cet ancrage est d'autant plus efficace que l'extrémité 8 du tuyau 9 ne peut s'incurver vers le centre du fait de la présence de la douille de renfort 21.

Avantageusement, cette rondelle de retenue 27 est en acier inoxydable de dureté supérieure à celle du tuyau 9 même si ce dernier est en acier pour être certain que les lamelles 30, 31, 32 s'incrustent dans la chair du tuyau 9.

Du fait que la rondelle de retenue 27 est située au fond de l'alésage 3, les lamelles 30, 31, 32 ne peuvent, lors de l'introduction du tube 9, rayer celui-ci dans sa zone d'étanchéité.

Contre la rondelle de retenue 27 prennent appui les moyens dilatateurs 5.

On se réfère à la figure 5.

Les moyens dilatateurs 5 sont une bague dilatatrice 37. Celle-ci comporte, du côté de la rondelle de retenue 27, un arrêt formé d'une surface tronconique 38 dont la petite base est située du côté de la rondelle de retenue 27 contre lequel prennent appui les lamelles 30, 31, 32 de la rondelle de retenue 27 pour éviter que lesdites lamelles 30, 31, 32, lors de l'effet de déboitement, se retournent entièrement, ce qui annihilerait leur effet d'ancrage. Cette surface tronconique 38 aboute à une gorge de centrage 39 dans laquelle vient se loger le chant avant 40 de la rondelle de retenue 27. Du côté des moyens d'étanchéité 6, la bague dilatatrice 37 comporte un chant en forme de coin 43. A cet effet, l'alésage cylindrique 41 aboute à un alésage tronconique 42 s'évasant en direction du chant en forme de coin 43 dirigé vers les moyens d'étanchéité 6. Ce chant en forme de coin 43 est relié par un arrondi 44 à une surface externe tronconique 45 reliant ledit chant 43 au pourtour extérieur 46 de la bague dilatatrice 37. En raison de la forme particulière du chant en forme de coin 43 tel que visible dans la figure 5, ce chant 43 a la forme d'un coin, et provoque la dilatation axiale des moyens d'étanchéité 6.

On se réfère à la figure 4.

Les moyens d'étanchéité 6 sont un joint 47 présentant sur sa face 48 dirigée vers la bague dilatatrice 37 deux lèvres circulaires 49, 50, l'une intérieure 49, épousant la paroi extérieure 25 de l'extrémité 8 du tuyau 9 alors que l'autre extérieure 50, prend appui contre le second décrochement 16 de l'alésage 3 du corps 2. Ces deux lèvres circulaires 49, 50 forment un certain angle 51 entre-elles et dans cet angle 51 vient se placer le chant 43 de la bague dilatatrice 37 provoquant l'écartement desdites lèvres circulaires 49, 50. Pour rendre la lèvre extérieure 50 plus souple, on réalise dans sa face externe 52 une gorge semi-ronde 53, ce qui permet d'obtenir deux anneaux de contact 54, 55. Lorsque la bague dilatatrice 37 agit sur le joint 47, on obtient un écrasement de la gorge semi-ronde 53 et la zone de contact entre la lèvre extérieure 50 du joint 47 et le second décrochement 16 ne se limite plus aux anneaux de contact 54, 55 mais peut s'étendre depuis l'un 54 à l'autre anneaux de contact 55. Ainsi, plus l'effet de déboitement est important, plus on obtient un serrage et une étanchéité accrus au-fur-et-à-mesure de l'augmentation de la pression tout en garantissant une bonne étanchéité à basse pression en raison de la forme particulière de la lèvre circulaire externe 50 du joint 47.

Ces lèvres circulaires 49, 50 aboutent à un bourrelet torique 56 jouant le rôle de cache-poussière. En raison de sa forme torique, on obtient un troisième anneau de contact 57. Le bourrelet torique 56 est situé en amont des lèvres 49, 50. Du côté 58 dirigé vers le bague supérieure de retenue 7, le joint 47 comporte un alésage tronconique 59 pour faciliter l'introduction de l'extrémité 8 du tuyau 9.

Contre la face 60 du joint 47 prend appui la face 61 de la bague supérieure de retenue 7.

Selon un premier mode de réalisation, la bague supérieure de retenue 7 comporte un décrochement 62 dont l'épaulement 63 sert d'arrêt à un sertissage 64 maintenant les différents éléments 4, 5, 6 et 7. Ce sertissage 64 est simple à réaliser et permet d'obtenir une forte tenue à la pression et un contact optimal entre les différents éléments 4, 5, 6, 7, l'extrémité 8 du tuyau 9 et la douille de renfort 21.

Selon un autre mode de réalisation, la bague supérieure de retenue 7 comporte un filetage permettant de visser ladite bague 7 dans un taraudage réalisé dans le premier décrochement 13 de l'alésage 3 du corps 2.

Le raccord rapide 1 conforme à l'invention peut être exécuté sous forme de raccord droit mais aussi de pièces matricées telles que coudes, té et autres. Il peut permettre de raccorder une tuyauterie à un organe mais également deux tuyauteries entre-elles lorsqu'il est réalisé en jonction double. Dans tous les cas, il joue le rôle d'antivrillage lors du montage d'éléments flexibles.

Ce mode de réalisation du raccord rapide présente l'avantage de posséder une excellente tenue vis-à-vis des hautes pressions, par exemple cent cinquante bars. Cependant, l'on se réfère maintenant au second mode de réalisation du raccord rapide selon l'invention, pourvu d'une douille intérieure rapportée permettant une meilleure adaptabilité à des tuyaux de différents diamètres, pour une même partie usinée.

On se réfère à cet effet à la figure 9.

Le raccord rapide 101 comporte un corps 102 dans lequel est réalisé un alésage 103 destiné à recevoir l'extrémité 108 d'un tuyau 109 du circuit de fluide sous pression. Cette extrémité 108 pénètre dans le corps 12 depuis l'extrémité 114 de ce dernier. A l'autre extrémité 110, le corps 102 comporte un orifice 165 dont le diamètre est inférieur au diamètre de l'alésage 103, ce qui permet d'obtenir un épaulement 166. Contre cet épaulement 166 vient buter l'extrémité 167 d'une douille intérieure rapportée 168.

L'alésage 103 présente un décrochement 116 permettant d'obtenir un épaulement 117. Contre ce dernier prennent appui des moyens d'ancrage 104 constitués d'une rondelle de retenue formée d'un anneau extérieur 128 et d'une pluralité de lamelles élastiques 130. Ces lamelles élastiques 130 présentent une certaine inclinaison dirigée vers l'épaulement 117 et, après montage, s'incrustent dans l'extrémité 108 du tuyau 109 réalisé en polyamide, en aluminium, en cuivre ou en acier. Contre cette rondelle sont appliqués des moyens dilatateurs 105 coopérant avec des moyens d'étanchéité 106.

A hauteur de la face 160 du joint 147 constituant les moyens d'étanchéité 106, l'alésage 103 présente un autre décrochement 113 dont l'épaulement 115 sert d'arrêt à une bague extérieure de retenue 107. Cette dernière comporte un décrochement 162 coopérant avec un sertissage 164 pour maintenir dans l'alésage 103 la douille intérieure rapportée 168, les moyens d'ancrage 104, les moyens dilatateurs 105, les moyens d'étanchéité 106 et la bague supérieure de retenue 107.

On se réfère à la figure 10.

La douille intérieure rapportée 168, réalisée en acier, acier inoxydable, aluminium ou autre matériau dur, se compose d'un embout cylindrique 169 et d'une portée cylindrique 170. Sur l'embout cylindrique 169 est enfilée l'extrémité 108 du tuyau 109. A cet effet, cet embout cylindrique 169 comporte à son extrémité libre 171 un chanfrein 172 facilitant le centrage de l'extrémité 108 du tuyau 109 par rapport à l'embout cylindrique 169. Le diamètre extérieur 173 de ce dernier correspond au diamètre intérieur du tuyau 109.

La portée cylindrique 170 comporte un diamètre extérieur 174 légèrement inférieur au diamètre de l'alésage 103 du corps 102 pour un emmanchement à force de la douille intérieure rapportée 168 dans ledit alésage 103. Pour faciliter l'introduction de la douille intérieure rapportée 168 dans ledit alésage 103, l'extrémité 167 comporte un chanfrein 175.

Un des avantages essentiels réside dans le fait que l'on peut utiliser le même corps 102 pour des diamètres de tuyaux différents. En effet, le diamètre extérieur 173 de l'embout cylindrique 169 peut varier en fonction du diamètre du tuyau 108 alors que le diamètre extérieur 174 de la portée cylindrique 170 est constant et correspond à l'alésage 103 du corps 102.

Pour une meilleure tenue, il est nécessaire que les lamelles 130 des moyens d'ancrage 104 s'incrustent dans l'extrémité 108 du tuyau 109 à une certain distance du chant extrême 176 du tuyau 109 (voir figure 1).

A cet effet, on réalise dans la face 177 de la portée cylindrique 170 une rainure 178. La paroi interne 179 est située dans le prolongement de l'embout cylindrique 169 alors que le diamètre de la paroi externe 180 correspond au diamètre extérieur du tuyau 109. Pour faciliter l'introduction de l'extrémité 108 du tuyau 109, cette paroi externe 180 comprend une extrémité chanfreinée 181.

## Revendications

1. Raccord rapide pour circuits de fluide sous pression, dont la pression peut atteindre cent cinquante bars, composé d'un corps (2) présentant un alésage (3) dans lequel est aménagé une douille de renfort (21) servant au centrage du tube ou tuyau à raccorder (9), dans l'alésage (3) étant engagée, en outre, une rondelle de retenue (4), une bague dilatatrice (5), un joint d'étanchéité (6) et une bague supérieure de retenue (7), caractérisée par le fait que ledit corps (2) présente, dans son alésage (3), un premier décrochement (13) délimité par un épaulement (15) et dans lequel est sertie la bague supérieure de retenue (7), celle-ci comportant un décrochement (62) dont l'épaulement (63) sert d'arrêt à un sertissage (64) du corps (2), ladite bague supérieure de retenue maintenant en position le joint d'étanchéité (6), la bague dilatatrice (5), la rondelle de retenue (4), la douille de renfort (21) ainsi que le tube ou tuyau à raccorder (9), dans le second décrochement (16) de l'alésage (3) dudit corps (2) lors de la mise sous pression du fluide.

2. Raccord rapide selon la revendication 1, caractérisé par le fait que la douille de renfort est une douille intérieure rapportée (168) composée d'un embout cylindrique (169) sur lequel est enfilée l'extrémité (108) du tuyau (109) engagée dans le raccord rapide (1), et d'une portée cylindrique (170) aboutant à l'embout cylindrique (169) et ammanchée en force dans l'alésage (103) du corps (102).

3. Raccord rapide selon la revendication 2, caractérisé en ce que l'embout cylindrique (169) présentant à son extrémité libre (171) un chanfrein (172) comporte un diamètre extérieur (173) variable et correspondant au diamètre intérieur du tuyau (109).

4. Raccord rapide selon la revendication 2, caractérisé en ce que la portée cylindrique (170) comporte un diamètre extérieur (174) constant et correspondant au diamètre de l'alésage (103) du corps (102).

5. Raccord rapide selon la revendication 2, caractérisé en ce que le diamètre extérieur (174) de la portée cylindrique (170) est légèrement supérieur au diamètre de l'alésage (103) du corps (102) pour un emmanchement en force de la douille intérieure rapportée (168) dans l'alésage (103).

6. Raccord rapide selon la revendication 2, caractérisé en ce que l'extrémité (167) de la portée cylindrique (170) comporte un chanfrein (175) pour faciliter l'introduction de la douille intérieure rapportée (168) dans l'alésage (103).

7. Raccord rapide selon la revendication 2, caractérisé en ce que la portée cylindrique (170) comporte, dans sa face (177), une rainure (178) dont la paroi interne (179) est située dans le prolongement de l'embout cylindrique (169) et dont la paroi externe (180) a un diamètre correspondant au diamètre extérieur du tuyau (109).

8. Raccord rapide selon la revendication 7, caractérisé en ce que la paroi externe (180) comporte une extrémité chanfreinée (181) pour faciliter l'introduction de l'extrémité (108) du tuyau (109) dans la rainure (178).

9. Raccord rapide selon la revendication 2, caractérisé en ce que le corps (102) comporte à son extrémité (110) un orifice (165) dont le diamètre est inférieur au diamètre de l'alésage (103) délimitant un épaulement (166) contre lequel vient buter l'extrémité (167) de la douille intérieure rapportée (168) réalisée en un matériau dur tel que acier, acier inoxydable, aluminium.

## Patentansprüche

1. Schnellverbindung für unter Druck stehende Flüssigkeitssysteme, in denen der Druck einhundertfünfzig Bar erreichen kann, bestehend aus einem Körper (2), der eine Bohrung (3) aufweist, in der eine Verstärkungshülse (21) angeordnet ist, die der Zentrierung des zu verbindenden Schlauches oder Rohres (9) dient, wobei in die Bohrung (3) überdem eine Sicherungsscheibe (4), ein Ausdehnungsring (5), eine Dichtung (6) und ein oberer Sicherungsring (7) eingeführt werden, dadurch gekennzeichnet, daß der genannte Körper (2) in seiner Bohrung (3) einen ersten Rücksatz (13) aufweist, der durch einen Ansatz (15) begrenzt ist und in dem der obere Sicherungsring (7) eingefaßt ist, wobei dieser letzte einen Rücksatz (62) umfaßt, dessen Ansatz (63) als Anschlag für eine Einfassung (64) des Körpers (2) dient, wobei der genannte obere Sicherungsring die Dichtung (6), den Ausdehnungsring (5), die Sichereungsscheibe (4), die Verstärkungshülse (21) sowie den zu verbindenden Schlauch oder Rohr (9) bei der Unterdrucksetzung der Flüssigkeit im zweiten Rücksatz (16) der Bohrung (3) des genannten Körpers (2) hält.

2. Schnellverbindung nach Anspruch 1, dadurch gekennzeichnet, daß die Verstärkungshülse (21) eine eingesetzte Innenhülse (168) ist, die aus einem zylindrischen Anschlußstück (169), auf welches das Ende (108) des in die Schnellverbindung (1) eingeführten Rohres (109) geführt wird, und einem zylindrischen Laufzapfen (170), der mit dem zylindrischen Anschlußstück (169) verbunden und gezwungen in der Bohrung (103) des Körpers (102) eingeführt ist, besteht.

3. Schnellverbindung nach Anspruch 2, dadurch gekennzeichnet, daß das zylindrische Anschlußstück (169), das an seinem freien Ende (171) eine Abschrägung (172) aufweist, einen variierbaren, dem Innendurchmesser des Rohres (109) entsprechenden Außendurchmesser (173) hat.

4. Schnellverbindung nach Anspruch 2, dadurch gekennzeichnet, daß der zylindrische Laufzapfen (170) einen konstanten, dem Durchmesser der Bohrung (103) des Körpers (102) entsprechenden Außendurchmesser (174) hat.

5. Schnellverbindung nach Anspruch 2, dadurch gekennzeichnet, daß der Außendurchmesser (174) des zylindrischen Laufzapfens (170) leicht kleiner ist als der Durchmesser der Bohrung (103) des Körpers (102), zwecks einer gezwungenen Einführung der eingesetzten Innenhülse (168) in die Bohrung (103).

6. Schnellverbindung nach Anspruch 2, dadurch gekennzeichnet, daß das Ende (167) des zylindrischen Laufzapfens (170) eine Abschrägung (175) umfaßt, um die Einführung der eingesetzten Innenhülse (168) in die Bohrung (103) zu erleichtern.

7. Schnellverbindung nach Anspruch 2, dadurch gekennzeichnet, daß der zylindrische Laufzapfen (170) in seiner Fläche (177) eine Nute (178) aufweist, deren Innenwand (179) sich in der Verlängerung des zylindrischen Anschlußstückes (169) befindet und deren Außenwand (180) einen dem Außendurchmesser des Rohres (109) entsprechenden Durchmesser hat.

8. Schnellverbindung nach Anspruch 7, dadurch gekennzeichnet, daß die Außenwand (180) ein abgeschrägtes Ende (181) umfaßt, um die Einführung des Endes (108) des Rohres (109) in die Nute (178) zu erleichtern.

9. Schnellverbindung nach Anspruch 2, dadurch gekennzeichnet, daß der Körper (102) an seinem Ende (110) eine Öffnung (165) aufweist, deren Durchmesser kleiner ist als der Durchmesser der Bohrung (103), die einen Ansatz (166) begrenzt, an den das Ende (167) der eingesetzten Innenhülse (168), aus einem harten Material, wie Stahl, Edelstahl, Aluminium, anlehnt.

**Claims**

1. Coupling of the quick-acting type for pressurized-fluid systems whereby the pressure can reach one hundred and fifty bar, comprised of a body (2) having a bore (3) in which is located a reinforcing sleeve (21) intended for the centering of the pipe or hose (9) to be coupled, in the bore (3) being engaged, moreover, a retaining washer (4), an expansion ring (5), a seal (6) and an upper retaining ring (7), characterized in that said body (2) has, in its bore (3), a first set-back (13) limited by a shoulder (15) and in which is set the upper retaining ring (7), same comprising a set-back (62) the shoulder (63) of which acts as a stop for a crimping (64) of the body (2), said upper retaining ring (7) maintaining into position the seal (6), the expansion ring (5), the retaining washer (4), the reinforcing sleeve (21) as well as the hose or pipe to be coupled (9), in the second set-back (16) of the bore (3) of said body (2) when the fluid is pressurized.

2. Coupling of the quick-acting type according to claim 1, characterized in that the reinforcing sleeve (21) is an inserted internal sleeve (168) comprised of a cylindrical nozzle (169) onto which is pulled the end (108) of the pipe (109) engaged into the coupling of the quick-acting type (1), and a cylindrical journal (170) jointing the cylindrical nozzle (169) and forcedly engaged into the bore (103) of the body (102).

3. Coupling of the quick-acting type according to claim 2, characterized in that the cylindrical nozzle (169), having at its free end (171) a chamfer (172), has a varying outer diameter (173) matching the inner diameter of the pipe (109).

4. Coupling of the quick-acting type according to claim 2, characterized in that the cylindrical journal (170) has a constant outer diameter (174) matching the diameter of the bore (103) of the body (102).

5. Coupling of the quick-acting type according to claim 2, characterized in that the outer diameter (174) of the cylindrical journal (170) is slightly smaller than the diameter of the bore (103) of the body (102) for a forced engagement of the inserted internal sleeve (168) into the bore (103).

6. Coupling of the quick-acting type according to claim 2, characterized in that the end (167) of the cylindrical journal (170) comprises a chamfer (175) in order to make easier the engagement of the inserted internal sleeve (168) into the bore (103).

7. Coupling of the quick-acting type according to claim 2, characterized in that the cylindrical journal (170) comprises, in its face (177) a slot (178) the inner wall (179) of which is located in the extension of the cylindrical nozzle (169) and the outer wall (180) of which has a diameter corresponding to the outer diameter of the pipe (109).

8. Coupling of the quick-acting type according to claim 7, characterized in that the outer wall (180) comprises a chamfered end (181), in order to make easier the engagement of the end (108) of the pipe (109) into the slot (178).

9. Coupling of the quick-acting type according to claim 2, characterized in that the body (102) comprises, at its end (110), an opening (165) the diameter of which is smaller than the diameter of the bore (103) limiting a shoulder (166) against which rests the end (167) of the inserted internal sleeve (168) made of a hard material, such as steel, stainless steel, aluminium.

## FIG.1

## FIG. 2

## FIG.3

1

EP 0 187 608 B1

FIG. 4

FIG. 5

FIG. 6

FIG. 7

FIG. 8

2

# FIG. 9

# FIG. 10